# EUROPEAN PATENT SPECIFICATION

(11) **EP 1 467 268 B1**
(45) Date of publication and mention of the grant of the patent: **24.06.2009**
(21) Application number: 04101396.2
(22) Date of filing: 05.04.2004
(51) Int. Cl.: G05B 19/042

(54) **Decoder for watering system**
Dekoder für eine Bewässerungsanlage
Décodeur pour un système d'arrosage

(30) Priority: 09.04.2003 IT MI20030708
(43) Date of publication of application: 13.10.2004
(73) Proprietor: CLABER S.P.A., I-33080 Fiume Veneto Pordenone (IT)
(72) Inventor: Brundisini, Andrea, 40137, BOLOGNA (IT)
(74) Representative: Mittler, Enrico

(56) References cited:
- EP-A- 1 103 178
- US-A- 4 131 882
- US-A- 5 048 755

## Description

The present invention concerns a decoder for watering system.

For the maintenance of lawns, gardens and other green spaces automatic watering systems are known that are controlled by central electronic control units normally called electronic central units.

Such types of systems can be of the type in which the central control unit is connected through a single pair of cables with all the solenoid valves belonging to the watering system; more precisely said control unit is connected by means of a single pair of cables with units each one comprising a solenoid valve and a decoder, that is a device suitable to decode and to codify electric signals which are received from and sent to the control unit.

The decoders can be of the type with two poles or three poles with an alternated or direct current supply.

In turn the single decoder can operate the solenoid of each solenoid valve both in alternated as well as in direct current.

Considering the great popularity of 24VAC solenoids it becomes usual to use such typology of solenoids for the control of the valves of the watering system.

The control unit must supply a current given by the value of the current necessary to activate a solenoid by the number of solenoids present in the system. Normally the systems with decoder are utilised to water up to long distances from the central unit (of the order of 5 km) and are used when the number of valves to be controlled is high (for example 100); this makes a very high current necessary, that, in turn, implies a larger section of the cables and therefore high costs of the cable and installation.

However, since 24VAC solenoids need a greater energy only in the initial moment and then it is possible to reduce it, the intensity of the current must initially be high whereas it can be lower in the subsequent moments of time.

For this reason to the 24VAC solenoids a start command is sent that is made up of a start signal and of a maintenance signal; the start signal is an initial pulse of the duration of a few milliseconds (for instance 35 ms) whereas the maintenance signal is made up of subsequent pulses of the duration of microseconds (for instance 244µs) and at intervals of several microseconds (for instance of 1350 µs).

The use of AC solenoids derives from the fact that said solenoids are safer than bistable solenoids. In fact, in the case of transients on the line or interruptions of the same, by the use of bistable solenoids the solenoid valves could stay always open or never open. That would imply a lack in irrigation for some days or an absence of the same.

By using solenoids of AC type the condition of always open valve is not possible since in lack of signal said AC solenoids automatically control the closing of the solenoid valves. The never open condition of the solenoid valve is instead possible if no signal arrives at the solenoid.

In watering systems utilising decoders the solenoids for the activation of the valves are mounted as close as possible to the relative decoder, therefore the possibility of an interruption of the connection between the decoder and the solenoid can be neglected whereas the interruption of the connection between the decoder and the central control unit is more probable. The decoder provides to the start of the relative solenoid by means of start signals and maintenance signal. If there is a transient or a voltage decrease on the connection line the solenoid could turn off and once the transient is over the maintenance signals would not be able to control the start of the solenoid any more.

EP 1 103 178 discloses a decoder according to the preamble of claim 1.

In view of the state of the art, object of the present invention is to provide a decoder for watering system that overcomes the aforesaid inconvenience.

According to the present invention such object is attained by means of a decoder comprising first terminals suitable to receive a codified electric start signal coming from a control unit, means for decoding said start signals, programmable controller means provided with memory and startable by the decoded start signal, signal generating means controlled by said controller means so as to generate a control signal in alternate current in order to turn on and off at least one solenoid in alternate current for the start of a solenoid valve, said control signal comprising an initial pulse for the start of the solenoid and a plurality of pulses at prefixed cadence for the maintenance of said solenoid in the ON state, said initial start pulse having a certain voltage value and a certain duration and each one of said maintenance pulses having equal voltage value but duration shorter than said start pulse, characterised in that said programmable controller means control said signal generating means so that said control signal comprises the repetition of said initial start pulse and said maintenance pulses at prefixed cadence for a predetermined number of times.

The characteristics and the advantages of the present invention will become evident from the following detailed description of an embodiment thereof, that is illustrated as a non limiting example in the enclosed drawings, in which:
Figure 1 shows a topology of connection for a known watering system;
Figure 2 shows in greater detail the typology of connection of the system in Figure 1;
Figure 3 shows in schematic way a decoder used in the system in Figure 2;
Figure 4 shows the blocks layout of a decoder according to the present invention;
Figure 5 shows the diagram of the voltage signal sent by the decoder to the solenoid for the control of a solenoid valve.

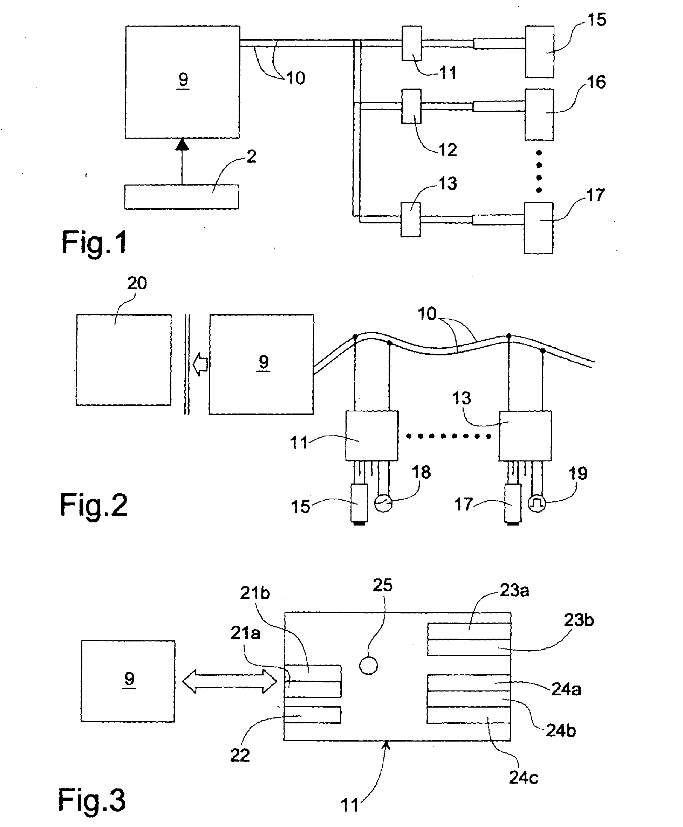

The present invention refers particularly to a watering system in which a central control unit 9 is connected through a single pair of cables 10 with a set of decoders 11, 12,... 13 connected with respective solenoids 15, 16, ...17 of an equal number of solenoid valves, as shown in Figure 1. The solenoids 15, 16, ...17 are alternate current solenoids, more precisely 24VAC solenoids. The central control unit 9 is supplied by the power supply 2.

The control unit 9, as better shown in Figure 2, provides on one side the connection toward the so-called user interface 20 which can be for instance a computer or a modem or another interfacing device, and on the other side through electric cables 10, specifically with two poles, toward the different decoders 11, 12,... 13 and relative solenoids 15, 16,... 17 of the solenoid valves.

The power supply of the decoders 11, 12.,... 13 preferably takes place through the same electric cables 10 in alternate current.

The decoders 11,..., 13 are connected besides with the solenoids 15,..., 17 also with respective sensors 18,..., 19, that can be of the ON/OFF type, that is sensors of the open/close type, that is only two possible operation states, or of the pulse type, that is operation conditioned to the continuous reception of control signals.

The control unit 9 is a central control unit known per se which can be more or less sophisticated.

In the case of a control unit 9, particularly simple, said control unit 9 is capable, for instance, to generate the pulses for the operation of the decoders 11, ...,13 but not to manage the sensors 18,..., 19, whereas a more sophisticated control unit 9 can, based on the irrigation parameters that will be given to it for instance provided by an external personal computer through a local or remote connection, manage the control of the decoders 11, ..., 13, of the solenoids 15, ..., 17 and of the sensors 18, ..., 19.

The control unit 9 can work either in autonomous mode (also called stand alone) or in centralised mode.

In the case of autonomous mode a control unit can manage the watering system once it has been opportunely configured through a connection typology as, for instance, serial cable RS-232 or short wave radio connection.

In the case of centralised mode, instead a control unit can manage the watering system according to the indications received from a remote system through a connection typology as, for instance, direct serial, or telephone, or cellular telephone, or satellite telephone communication or through radio frequency connection.

The operation of control units made this way for the autonomous or centralised management of a watering system is well known to one skilled in the art and therefore it will not be illustrated in the present description.

The decoder 11, shown in schematic way in Figure 3 and considered as an example of one of the decoder being utilised, comprises a pair of inlet/outlet terminals 21a and 21b suitable to receive said electric cables 10 and a ground terminal 22. In addition, said decoder 11 has an additional pair of inlet/outlet terminals 23a and 23b for the sensor 18, for instance, and an additional plurality of inlet/outlet terminals 24a, 24b and 24c suitable to manage the operation of the solenoid 15 (not shown in Figure 2) and the relative solenoid valve.

Finally, the decoder 11 also has a LED indicator 25 suitable to indicate the operativity of the same decoder 11.

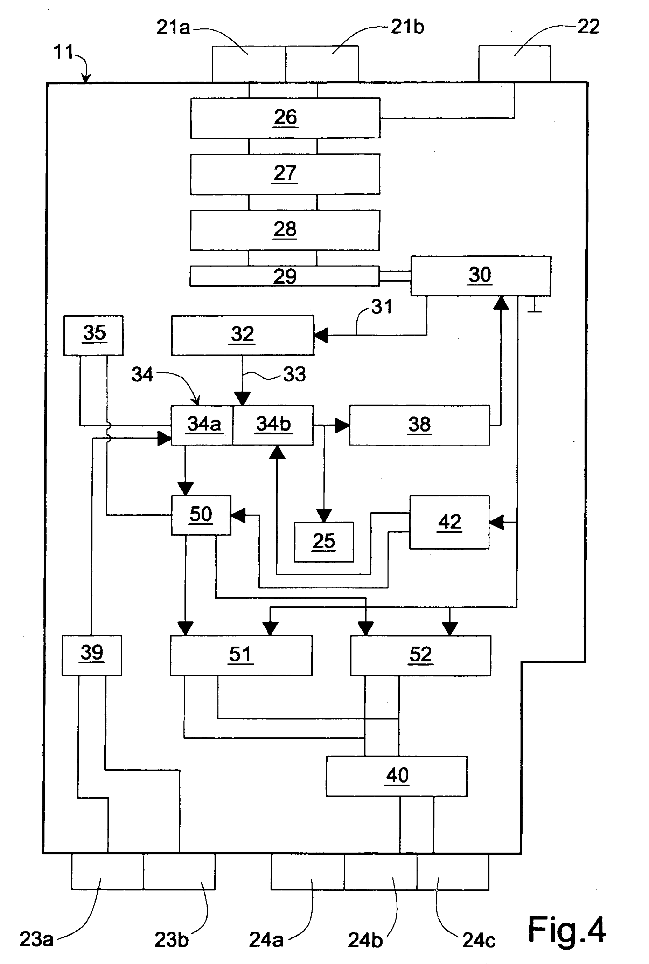

A block layout of the decoder 11 according to the present invention is shown in Figure 4. In particular to the inlet/outlet terminals 21a and 21b specific for the bipolar electric cable 10 for the power supply, codifying and sensor reading, a series is connected that is made up of a first block 26 of primary protection against line overvoltage, of a second block 27 of secondary protection against line overvoltage, of a third block 28 for the quick protection against line overvoltage and of a fourth block 29 suitable to filter transients on the alternate voltage present on the electric cable 10.

In addition the primary protection block 26 is connected with ground terminals 22 of the decoder 11.

The series of blocks 26, 27 and 28 represents the three levels of protection against flashovers which can be present on the power supply cable 10.

In particular on such electric cable 10 there is, for instance, an alternate voltage comprised between 24 and 33 Vac with a typical frequency, for instance, of approximately 2 Hz.

The filtering block 29 is connected with a rectifier circuit 30 made up for instance of a diode valve jumper. The rectifier circuit 30 outputs a rectified signal 31 that is the input of a detection circuit 32.

The detection circuit 32 outputs a signal 33 that turns out to be the decoding of the signal present on the power supply cable 10. This signal 33 is the input of a microcontroller 34 which includes therein a real processing unit 34a and a memorisation section 34b. Such memorisation section 34b is made, for instance, with non volatile memory of type the EEPROM. As an alternative the EEPROM memory can be external to the microcontroller.

In both cases a direct connection is created between memorisation section 34b and processing section 34a.

The microcontroller 34 has a working frequency established by a quartz oscillator 35, having a frequency of operation for instance of 32,768 KHz.

The microcontroller 34, in particular, directly controls the LED indicator 25 and a charge circuit 38 of the power supply cable 10 in order to communicate the values detected by the sensor (not shown in Figure 4).

The microcontroller 34 is connected with a reading circuit 39 that in turn is connected with inlet 23a and outlet 23b terminals for the sensor (not shown in Figure 4).

The microcontroller 34 in addition is connected with a second microcontroller 50 in turn connected with the oscillator 35 and with two circuits 51 and 52 capable to generate impulsive signal with different duration and frequency for the operation of the solenoid valve, more precisely for the operation of the 24 VAC solenoid of the solenoid valve. As an alternative the microcontroller 34 and the microcontroller 50 can be made up of a single microcontroller.

The circuits 51 and 52 are connected to a protection block 40 against overvoltage present on the same solenoid valve. In particular said protection block 40 is connected with the terminals 24a, 24b, and 24c in which the terminals 24a and 24b are the control terminals for the solenoid 15 (not shown in Figure 4) whereas the terminal 24c is the terminal connected with the ground.

A power supply circuit directly connected with the diode valve jumper rectifier circuit 30 provides the operating voltage to the microcontrollers 34 and 50 and to the circuits that require a regulated voltage.

The circuits 51 and 52 are supplied by the diode valve jumper circuit 30.

It must be noted in addition that the LED 25 allows to verify in situ the correct operation of the decoder 11 itself, through, for instance, the intermittent lightening of the same LED 25 one or more times.

Essential characteristic of the present invention is the presence of the non volatile memory of the type EEPROM 34b inside the microprocessor 34, that owing to the presence of the detection circuit 32, having the function to decode the signals transported by the supply cable 10, has the task to memorise in permanent way the identification number and the parameters for the operation of the decoder 11 inside the same memory 34b.

In order to be able to carry out the operation of memorisation in the EEPROM memory of such identification number and such operation parameters, the Applicant has found it particularly advantageous to utilise a standard outlet present in all computers, that is the serial port in compliance with the standard RS - 232.

By using a port RS - 232 made that way and a standard cable in addition to a commonly used software, for instance as Excel and/or HyperTerminal, it is possible to connect with the inlet terminals 21a and 21b of the decoder 11.

In other words, the line inlet 21a and 21b of the decoder 11 has been made in such a way that in addition to the signals sent by the control system 9 to the decoder 11, it is also capable to recognise signals in output from the port RS - 232. The communication specifications to which every decoder 11,...13 must submit and the communication protocol that must exist between the serial port RS-232 belonging to a computer and the decoder 11,..., 13 are better described in the Italian patent application for industrial invention No. MI2001A002596 filed on 11.12.2001 of the same Applicant.

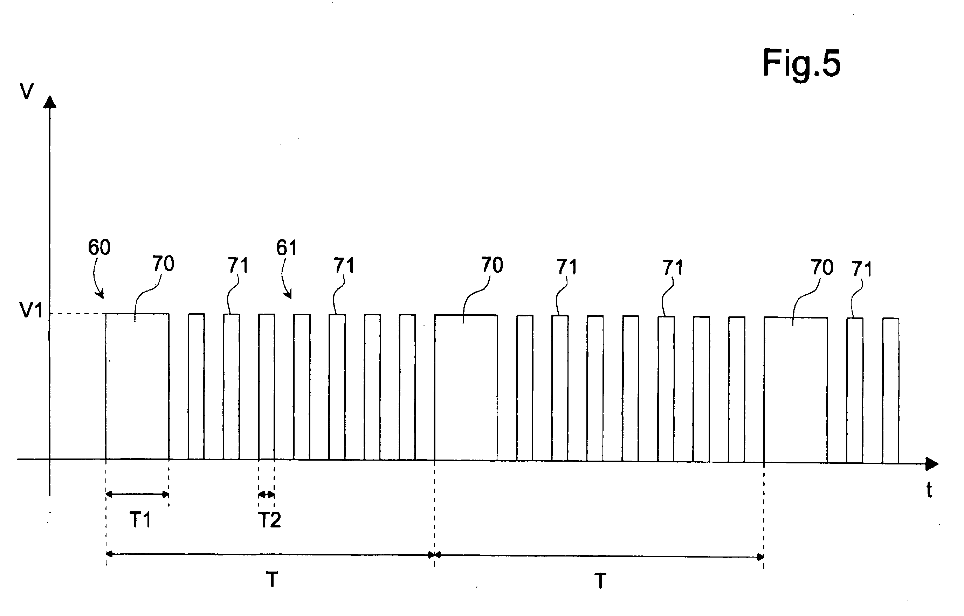

The circuits 51 and 52 are suitable to send totally to the control solenoid of the solenoid valve a single signal 60, shown in Figure 5, that it is made up of a start signals 70 generated by the circuit 51 and of a maintenance signal 61 generated by the circuit 52. The start signal 70 is made up of an initial pulse 70 of a certain value V1 (24V) and of a certain duration T1, for instance of 35ms, that determines the start of the solenoid 15 of the solenoid valve, whereas the signals 61 is made up of a series of pulses 71 equal in value V1 but with duration T2 (of 244µs) for instance shorter than the duration T1 and suitable to maintain the solenoid valve open. The pulses 71 are sent at intervals of time T3 one from the other; the interval of time T3 between a pulse 71 and the subsequent one are for instance of 1350µs.

The circuits 51 and 52 are controlled by the microcontroller 50 which manages the frequency of the pulses of the signals 70 and 61 for the operation of the solenoid. The microcontroller 50 receives from the microcontroller 34 the commands for the opening and closing of the solenoid valve.

The microcontroller 50 controls the circuit 51 in such a way that in the signal 60, after the first series of pulses 70 and 71, there are present other pulses 70 equal in value and in duration to the initial pulse 70 and having a period of time T of repetition equal for example to a minute, each pulse 70 being followed by a series of pulses 71 similar to the first one. The repetition of the initial pulse after every period T allows to restore the condition of opening of the solenoid even as a result of the presence of transients on the electric line of connection between the central unit and the decoder.

It is also provided that the control that activates the circuit 39 for the reading of the sensor is sent by the microcontroller 34 in a moment of time such as not to coincide with the instant of time for the sending of the pulses 70 of the signal 60 that is sent to the solenoid.

## Claims

1. Decoder (11,12,13) comprising first terminals (21a, 21b) suitable to receive a codified start signal (31) coming from a control unit (9), means (32) for decoding said start signals, programmable controller means (34, 50) provided with memory and startable by the decoded start signal (33), signal generating means (51, 52) controlled by said controller means (34, 50) in such a way so as to generate a control signal (60) in alternate current in order to turn on and off at least one solenoid in alternate current (15,.., 17) for the operation of a solenoid valve, said control signal (60) comprising an initial pulse (70) for the start of the solenoid and a plurality of pulses (71) with prefixed cadence (T3) for the maintenance of said solenoid in the ON state, said initial start pulse (70) having a certain voltage value (V1) and a certain duration (T1) and each one of said maintenance pulses (71) having equal voltage value but duration (T2) shorter than said start pulse (70), **characterised in that** said programmable controller means (50) control said signal generating means (51, 52) so that said control signal (60) comprises the repetition of said initial start pulse (70) and said maintenance pulses (71) with prefixed cadence (T) for a predetermined number of times.

2. Decoder according to claim 1, **characterised in that** it comprises second terminals (23a, 23b) suitable to exchange electric signals with detection means (39), said detection means (39) being commanded to operate in a moment of time different from the instant of time of the beginning of each start pulse (70) of the control signals (60)

3. Decoder according to claim 1, **characterised in that** said prefixed cadence (T3) of the maintenance pulses is 1350µs

## Patentansprüche

1. Decoder (11, 12, 13), umfassend: erste Terminals (21a, 21b), die in der Lage sind, ein verschlüsseltes Startsignal (31), das von einer Kontrolleinheit (9) kommt, zu empfangen, Mitteln (32), um diese Startsignale zu entschlüsseln, programmierbare Kontrollmitteln (34, 50), die mit einem Speicher ausgerüstet sind und durch das decodierte Startsignal (33) gestartet werden können, Signalgeneratoreinrichtungen (51, 52), die durch die Kontrollmittel (34, 50) so gesteuert werden, dass sie ein Wechselstrom-Kontrollsignal (60) generieren können, um zumindest ein Wechselstrom-Solenoid (15,.., 17) einzuschalten und auszuschalten, um so ein Magnetventil zu betreiben, das Kontrollsignal (60) umfasst einen Initialstartpuls (70) zum Start des Solenoids und eine Vielzahl von Instandhaltungspulsen (71) mit vorbestimmter Kadenz (T3) zur Aufrechterhaltung des Solenoids im ON-Status, der Initialstartpuls (70) hat einen gewissen Spannungswert (V1) und eine bestimmte Dauer (T1), und jeder der Instandhaltungspulse (71) hat die gleiche Spannung, aber eine Dauer (T2), die kürzer ist als die des Startpulses (70), **dadurch gekennzeichnet, dass** die programmierbaren Kontrollmittel (50) die Signalgeneratormittel (50, 51) so steuern, dass das Kontrollsignal (60) die Wiederholung des Initialstartpulses (70) und der Instandhaltungspulse (71) mit vorbestimmter Kadenz (T) für eine vorbestimmte Anzahl von Malen umfasst.

2. Decoder nach Anspruch 1, **dadurch gekennzeichnet, dass** er zweite Terminals (23a, 23b) aufweist, die in der Lage sind, elektrische Signale mit Detektoren (39) zu tauschen, die Detektoren (39) werden so gesteuert, dass sie in Zeitmomenten, die von dem Zeitpunkt des Beginns jedes Startpulses (70) der Kontrollsignale (60) unterschiedlich sind, operieren.

3. Decoder nach Anspruch 1, **dadurch gekennzeichnet, dass** die vorbestimmte Kadenz (T3) der Instandhaltungspulse 1350 µs beträgt.

## Revendications

1. Décodeur comprenant des premières bornes (21 a, 21 b) aptes à recevoir un signal d'activation codifié (31) provenant d'une unité de contrôle (9), des moyens de décodage (32) dudit signal d'activation, des moyens contrôleurs (34, 50) programmables dotés d'une mémoire et pouvant être activés par ledit signal décodé (33), des moyens générateurs de signal (51, 52) contrôlés par lesdits moyens contrôleurs (34, 50) de manière à générer un signal de contrôle (60) en courant alternatif pour mettre en marche ou arrêter au moins un solénoïde en courant alternatif (15, ..., 17) d'actionnement d'une électrovanne, ledit signal de contrôle (60) comprenant une impulsion initiale (70) de mise en marche du solénoïde et une pluralité d'impulsions (71) à cadence préfixée (T3) pour le maintien dudit solénoïde en état de marche, ladite impulsion initiale de mise en marche (70) ayant une valeur de tension donnée (V1) et une durée donnée (T1) et chacune desdites impulsions de maintien ayant une valeur de tension égale mais une durée (T2) inférieure à ladite impulsion de mise en marche (70), **caractérisé en ce que** lesdits moyens contrôleurs programmables (50) commandent lesdits moyens générateurs de signal (51, 52) de manière que ledit signal de contrôle (60) comprenne la répétition de ladite impulsion initiale de mise en marche (70) et desdites impulsions de maintien (71) à cadence préfixée (T) pour un nombre de fois prédéterminé.

2. Décodeur selon la revendication 1, **caractérisé en ce qu'**il comprend des deuxièmes bornes (23a, 23b) aptes à échanger des signaux électriques avec des moyens de détection (39), lesdits moyens de détection (39) étant commandés pour fonctionner à un moment dans le temps différent du moment dans le temps du début de chaque impulsion de mise en marche (70) du signal de contrôle (60).

3. Décodeur selon la revendication 1, **caractérisé en ce que** ladite cadence préfixée (T3) des impulsions de maintien est de 1350 µs.
